# EUROPEAN PATENT APPLICATION

(11) **EP 3 798 888 A1**
(43) Date of publication of application: **31.03.2021**
(21) Application number: 19306186.8
(22) Date of filing: 24.09.2019
(51) Int. Cl.: G06F 21/60, G06F 21/70, G06F 21/74, G06F 21/73

(54) **VIRTUAL PRIMARY PLATFORM (VPP) IMPLEMENTED ON A SECURE ELEMENT AND AN EXTERNAL ENVIRONMENT**

(71) Applicant: THALES DIS FRANCE SA, 92190 Meudon (FR)
(72) Inventor: BOUVERON, Dominique, 92190 MEUDON (FR); LEPAVEC, Emmanuel, 92190 MEUDON (FR); MINETTE DE SAINT MARTIN, Xavier, 92190 MEUDON (FR); REGNAULT, Claire, 92190 MEUDON (FR); SPYROPOULOS, Evangelos, 92190 MEUDON (FR); VIENNE, Nicolas, 92190 MEUDON (FR)
(74) Representative: Thomas, Christine Marie Catherine

(57) **Abstract**

The present invention relates to a method to implement a Virtual Primary Platform (VPP) using a Tamper Resistant Element (TRE) and an External Execution Environment (EEE), said Virtual Primary Platform (VPP) comprising a VPP Low Level Operating System (VPP LLOS) distributed across a VPP Process Execution Environment (VPEE) in the Tamper Resistant Element (TRE), the External Execution Environment (EEE), said VPP Low Level Operating System (VPP LLOS) comprising VPP LLOS API stubs installed in the VPP Process Execution Environment (VPEE) and routing communications between the VPP Process Execution Environment (VPEE) and the External Execution Environment (EEE) and an external agent (EA) installed in the External Execution Environment (EEE) and comprising processes' codes (CO) and data (DA) stored in the External Execution Environment (EEE) to be loaded for execution into the VPP Process Execution Environment (VPEE) in order, for the VPP Process Execution Environment (VPEE) to get a secure access to VPP external processes' code (CO) and data (DA), to emulate the VPP Low Level Operating System (VPP LLOS) functions and to manage processes' switches for the execution of any VPP application relying on the Virtual Primary Platform (VPP) to be executed.

## Description

### FIELD OF THE INVENTION

The present invention relates to a method to implement a Virtual Primary Platform as defined in the eponym standard using a Tamper Resistant Element and an External Execution Environment.

The invention also pertains to a Tamper Resistant Element adapted to implement the corresponding steps of said method.

### BACKGROUND OF THE INVENTION

Virtual Primary Platform (VPP) is an architecture currently developed by standardization instances like Global Platform and ETSI. This architecture aims to offer a secure and proven abstraction layer for Tamper Resistant Element (TRE) hardware resources, their accesses, and a set of defined services.

By design, strong security mechanisms are enforced in the Virtual Primary Platform (VPP) ecosystem. Indeed, VPP is based on features provided by a secure Low Level Operating System (LLOS). LLOS is expected to be certified and to provide a very high level of security while keeping a minimal footprint in memory.

As such, a significant initial investment is required to provide a component that would meet the feature set, size and security constraints at the same time.

VPP also mandates and relies on the use of specific hardware components to provide security guarantees. For instance, the direct memory transfer feature combines MMU, DMA and encryption mechanisms.

As a consequence, specific hardware is required, causing additional complexity. Delays for development and validation are observed while associated costs are prohibitive in many cases.

Indeed, the currently available Tamper Resistant Elements (TRE) are not ready to support the implementation of VPP ecosystem as specified because of all these constraints.

Further alternative and advantageous solutions would, accordingly, be desirable in the art.

### SUMMARY OF THE INVENTION

The present invention aims at proposing an intermediate implementation rendering the currently available TRE able to support the implementation of a VPP ecosystem.

The present invention is defined, in its broadest sense, as a method to implement a Virtual Primary Platform (VPP) using a Tamper Resistant Element and an External Execution Environment, said VPP comprising a VPP Low Level Operating System (VPP LLOS) distributed across:
- a VPP Process Execution Environment (VPEE) in the Tamper Resistant Element,
- the External Execution Environment,
said VPP LLOS comprising:
- VPP LLOS API stubs installed in the VPP Process Execution Environment and routing communications between the VPP Process Execution Environment and the External Execution Environment,
- an external agent installed in the External Execution Environment and comprising processes' codes and data stored in the External Execution Environment to be loaded for execution into the VPP Process Execution Environment in order, for the VPP Process Execution Environment to get a secure access to VPP external processes' code and data, to emulate LLOS functions and to manage processes' switches for the execution of any VPP application relying on the VPP to be executed.

The proposed solution allows to reduce hardware requirements of VPP architecture by separating VPP Low Level OS (LLOS) function, partially or in totality, from the VPP Process Execution Environment (VPEE) without altering security.

Externalizing LLOS functions from the VPEE allows to greatly relax the constraints on the runtime environment of the VPP Applications.

The invention enables to accommodate the actual hardware constraints and security concerns. LLOS distributed implementation design is completely transparent for the running VPP Application.

In the invention, the VPEE needs to communicate with the external agent in order to get a secure access to VPP processes' code and data, to emulate some LLOS functions and to manage processes switches.

The proposed solution enables the implementation of a working VPP with existing TREs, such as smartcards or embedded/integrated secure elements, as VPEE.

Advantageously, VPP LLOS functions are provided by the external agent or safely executed in the VPEE depending on the use case and on the External Execution Environment security level.

According to an advantageous embodiment, the External Execution Environment is remote.

According to an advantageous embodiment, the EEE manages several VPEE in parallel.

This enables to improve performances and security.

According to an advantageous features, redundancies are implemented among several VPEE managed in parallel by the EEE.

According to an advantageous application, when simulating a VPP system behavior to debug a VPP application, the VPEE is an emulator and the external agent is constrained to accurately reproduce the LLOS behavior.

For this application, it is here noted that it is not mandatory that VPP process data are encrypted.

According to another advantageous feature, a Memory Management Unit (MMU) is used in the implementation of the VPEE.

This feature is very advantageous in case the VPEE does not have enough memory to map all segments for an application.

According to a preferred embodiment, the Low Level OS (LLOS) is responsible to schedule the VPP processes while triggering a context change when needed, making the VPEE to encrypt the modified data of the previously running process and to unload it through the external agent, the LLOS making then the external agent to send to the VPEE an encrypted code and encrypted data of a newly scheduled process to be run and the VPE to decrypt them before resuming the execution of this newly scheduled process.

It is here noted that each above mentioned feature and embodiment can be combined indifferently with any one or several of the others.

According to a first implementation concerning context changes, context changes are performed when a new process invokes a service.

According to a second implementation concerning context changes, context changes are performed on a periodic basis.

The present invention also relates to a Tamper Resistant Element implementing a Virtual Primary Platform in collaboration with an External Execution Environment, said TRE comprising a VPP Process Execution Environment wherein at least a part of a VPP Low Level Operating System is implemented, the other part being implemented in the External Execution Environment, said TRE comprising VPP LLOS API stubs installed in the VPP Process Execution Environment and routing communications between the VPP Process Execution Environment and an external agent installed in the External Execution Environment and comprising processes' codes and data stored in the External Execution Environment to be loaded for execution into the VPP Process Execution Environment in order, for the VPP Process Execution Environment to get a secure access to VPP external processes' code and data, to emulate LLOS functions and to manage processes' switches for the execution of any VPP application relying on the VPP to be executed.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 schematically represents an overview of a VPP Architecture according to the invention;
- Figure 2 schematically shows a detailed architecture of the VPP Architecture according to the invention;
- Figure 3 schematically shows the VPP Low Level OS distribution according to the invention ;
- Figures 4A and 4B schematically show a context switching and memory management respectively in the prior art and according to the invention; and
- Figures 5A to 5E show in more details the memory management according to the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

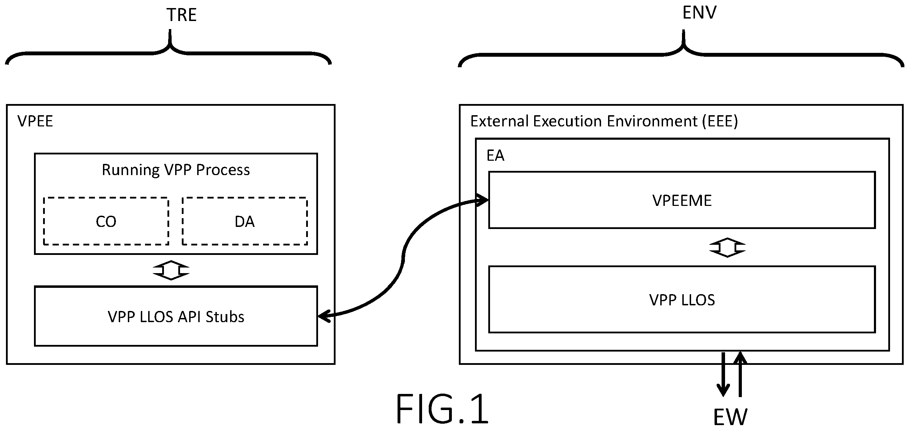

Figure 1 schematically represents an overview of a VPP Architecture according to the invention.

While TREs as disclosed in Global Platform VPP - Concepts and Interfaces concentrate all elements necessary for the implementation of a VPP, those elements are split according to the invention.

The TRE have a VPP Process Execution Environment VPEE. This VPEE includes only at least a running VPP process and Application Interface (API) stubs for communication with an external agent EA installed in an External Execution Environment EEE, said external agent EA comprising a VPP Low Level Operating System VPP LLOS and a VPEE Management module VPEEME. This module VPEEME interacts with VPP LLOS API Stubs and, as shown later in the specification, preferably with a dedicated module VPEEMV embedded in the VPEE. The External Execution Environment EEE is a part of any kind of environment ENV which can be a PC, another TRE, a remote server etc...

Communications of the VPP Process Execution Environment VPEE with the external world EW can be managed by the environment ENV via the external agent EA. It is here noted that communications as described on figures can be managed by the environment ENV but can also be managed by the TRE from the VPEE itself.

By default, the External Execution Environment EEE should be considered insecure and the external agent EA should only manipulate encrypted data.

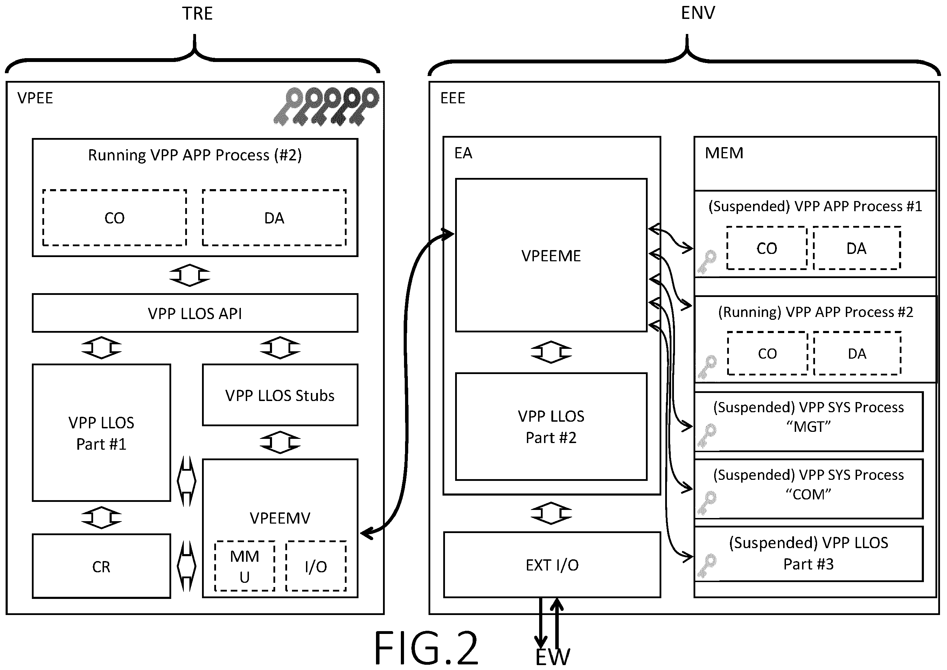

As a result, the VPP Process Execution Environment VPEE needs to embed:
- stubs of VPP LLOS API to transfer the execution to the external agent EA. Some part of the LLOS may still be directly provided in the VPP Process Execution Environment VPEE, especially when security is critical. This will be illustrated in figure 2;
- the process code being executed, or a part of this process, may it be a VPP application process, a VPP system process or a LLOS "process";
- the data being manipulated, or a part of those data, may it be private RAM variables, shared memory buffer, persistent NVM data or other types of stored data.

Figure 2 presents a detailed architecture of an embodiment for a VPP Architecture according to the invention. In this embodiment, the VPP LLOS is split in several parts in the VPEE and the external agent EA. In this embodiment the VPEE LLOS is divided in 3 parts, the first is in the VPEE, the second in the external agent EA and the third is in a memory MEM of the EEE.

The first part which is implemented in the VPEE collaborates with a cryptographic module CR and, typically, with any sensitive functions of the VPEE. It enables that the contents of all exchanges with the EEE are encrypted. Data exchanged between the EEE and VPEE should be protected according to the requirements of the application and the targeted level of security to ensure integrity and/or authenticity and/or confidentiality depending on the use case. It also includes the code that is loaded from the EEE to be executed in the TRE for the execution of any VPP application and the data necessary for the execution of this VPP application.

Here the VPEE is managed on both sides. Thus the VPEE also comprises a VPEE management module VPEEMV that interacts with a VPEE management module VPEEME installed in the external agent EA with the second part of the VPP LLOS. This interaction between the two dedicated modules consists in managing process swapping and runtime management for the VPP processes. This VPEE management module VPEEME is connected to the memory MEM of the EEE that stores the third part of VPP LLOS which can be solicited for a process to be run but which is not necessarily solicited for all processes to be run.

Indeed the memory MEM stores any suspended context and the corresponding data. On figure 2, a second VPP App Process #2 of a VPP application is running while contexts and data are stored for several suspended process, here a first VPP App Process #1 of a VPP application, two VPP system processes concerning respectively process management MGT habilitated to manage various process and communication COM to manage communication, and, of course, the suspended third part of the VPP LLOS.

Figure 2 also illustrates the VPP application data management according to the invention. Indeed, the VPP standard mandates a memory layout based on big segments to map the application data. Hence several cases are encountered while implementing VPP application. In a first case, VPEE offers enough memory to map all segments. In this case, the VPEE comprises all the necessary memory and data are stored in the TRE. The invention does not apply in such cases, for the data management at least.

However, this situation is quite unlikely, except specific cases, for instance simulating a VPP application.

In a second case, VPEE has not enough memory. If the VPEE has a MMU, then missing data are retrieved from the external agent EA when needed. In this case, the invention is implemented. If the VPPE does not have a MMU, memory mapping is adapted. This option may not be not strictly compliant with VPP's Minimum Level Of Interoperability (MLOI).

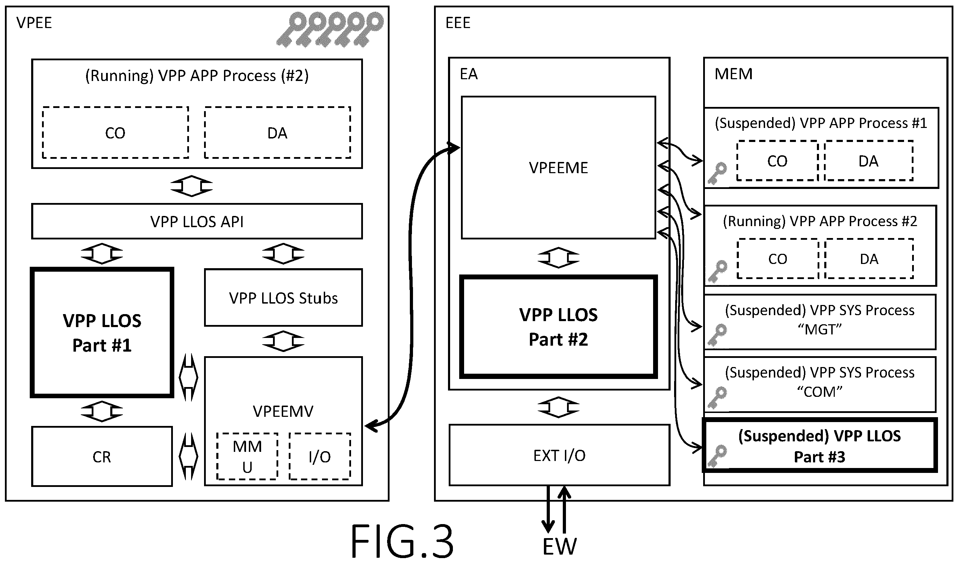

Figure 3 shows schematically the functionality distribution of a VPP LLOS according to the invention.

Using the flexible architecture of the invention, the VPP LLOS function is distributed across the bold highlighted elements:
- VPEE, where it is resident, for instance for simple or security critical parts. This is part #1 on figure 3,
- EEE, for non-critical functions. This is part #2 on figure 3,
- additional part of VPP LLOS stored in EEE memory MEM, requiring to be loaded dynamically for secure execution into VPEE. At the cost of performance, this part benefits from the VPEE security in the TRE without the size constraint. This is part #3 on figure 3.

The choice of distribution between these three parts allows to accommodate various needs in terms of the security, size and performance constraints.

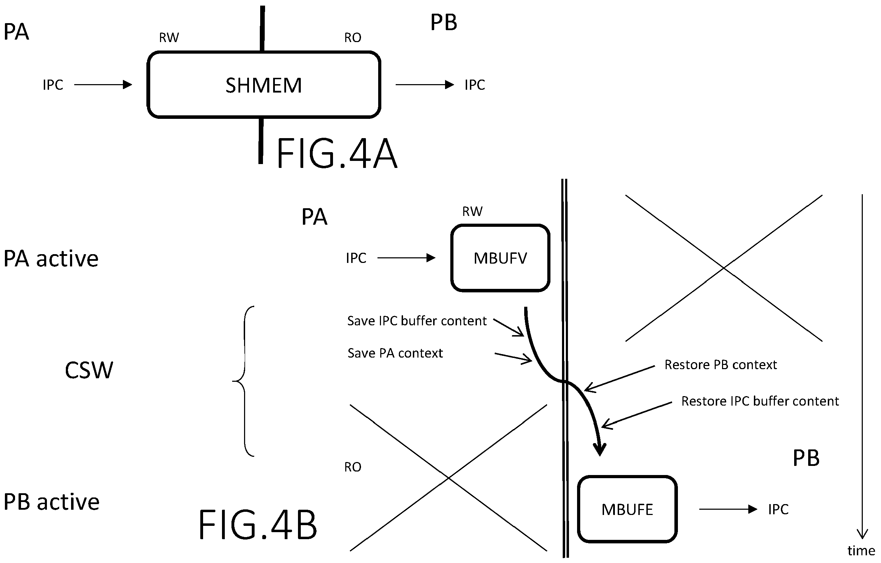

Figures 4A and 4B illustrates an Inter Process Communication IPC sharing between two processes PA, which is in read-write mode RW, and PB which is in read only mode RO, respectively, in the prior art and with the invention. Indeed, the VPP standard implies that processes are not executed in parallel. At a given time, the system is either executing a LLOS task, a VPP process or a VPP application process. Changing process requires a context switch managed by the LLOS.

Between context switches, VPP processes are autonomous and independent. As disclosed in standardization document "VPP - Concepts and Interfaces - Public Release v1.0.1", Inter Process Communication IPC based on a shared virtual memory SHMEM between two Processes PA and PB is used. This shared memory SHMEM works in read-only RO and read/write RW and is fully implemented on-board the VPP execution environment.

With the invention, the overall system behavior can be accurately emulated without actually sharing the memory. Shared resources such as IPC buffers SHMEM are never used concurrently in the invention.

Figure 4B schematically shows a data exchange between process PA and process PB via the shared IPC A->B: PA writes data in the shared IPC, in a buffer MBUFV and PB reads it, in a buffer MBUFE.

When a switch is required while the process PA is active, an inter process communication IPC is initiated and an internal memory buffer MBUFV of the VPEE management module VPEEMV is written in RW mode with the IPC buffer content and with the first process PA context.

Then a context switching step CSW is performed. It consists in un-scheduling the first process PA and in scheduling the second process PB. For this purpose the content of the internal buffer MBUFV is sent to an external memory buffer MBUFE for restoration of a second process PB corresponding to the inter process communication IPC as transferred.

The external memory buffer MBUFE then stores the IPC buffer content and the PA context for restoration of the process corresponding to the IPC as stored.

The external memory buffer MBUFE is then read in read only RO mode by the VPP management module VPPME for the IPC to be taken into account as in the standard specification. The process PB can then be activated as disclosed in the standard.

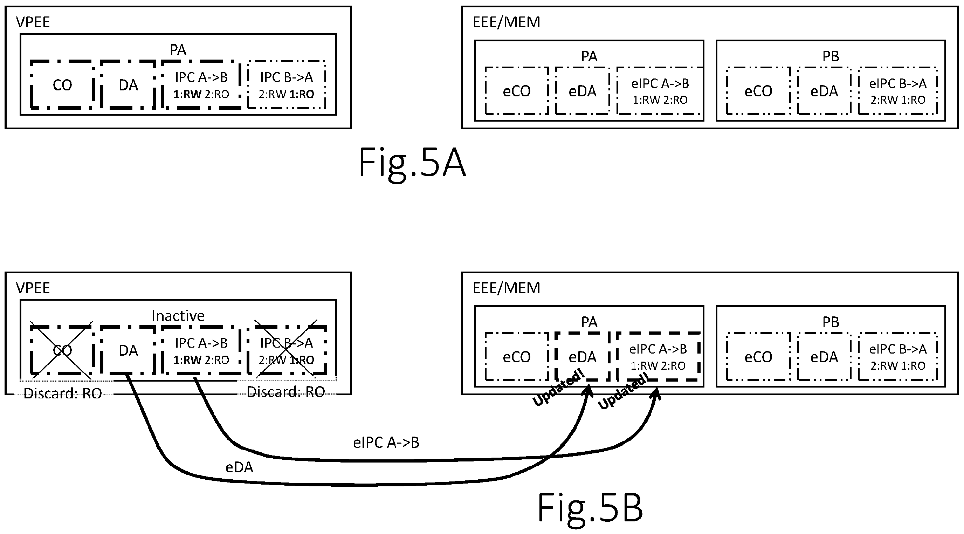

Following figures 5A to 5E disclose the process switching more precisely in terms of memory management. On this figure active process are represented using a bold line.

In an initial state illustrated on figure 5A, a first process PA, typically a VPP application process (also noted VPP APP Process #1 on figures 2 and 3), is running. This is illustrated by a two bold dot dashed boxes, one for the code CO and one for the data DA. Also an inter process switch has been triggered and IPC from first process PA to a second process PB in read/write mode RW is also activated. It can be noted that a read-only RO Inter Process Communication IPC B->A is also present in the VPEE. This was useful for a previous switch from process PB to process PA.

This illustrative example uses two processes PA and PB and two IPC PA to PB and PB to PA but it is applicable for more than two processes with IPCs for pairs of process PI, PJ.

For the need of the invention, the EEE memory MEM includes encrypted data eDA, encrypted code eCO and two encrypted IPC for a switch from process A to process B IPC elPC A->B and for the contrary elPC B->A. Elements concerning the first process PA are illustrated by one point dashed boxes and element concerning the second process PB are illustrated by two points dashed boxes.

In figure 5B is illustrated the un-scheduling of the process PA. The code for the first process PA is discarded on the VPEE side while the Inter Process communication buffer content and the context of process PA, here the data DA that were active, are encrypted in the VPEE to be offloaded to the EEE memory.

Encrypted IPC elPC and encrypted data eDA are then offloaded to the EEE memory. An update of the data DA stored for the process PA and for the IPC A->B are thus updated with the encrypted eDA and elPC A->B in the memory. This is illustrated with simple dashed boxes. It is here noted that the IPC B->A was not modified during the execution of the process PA and does not need to be updated on the EES side. Thus it is only discarded. It was indeed a read only RO IPC that was useful for the previous switch only.

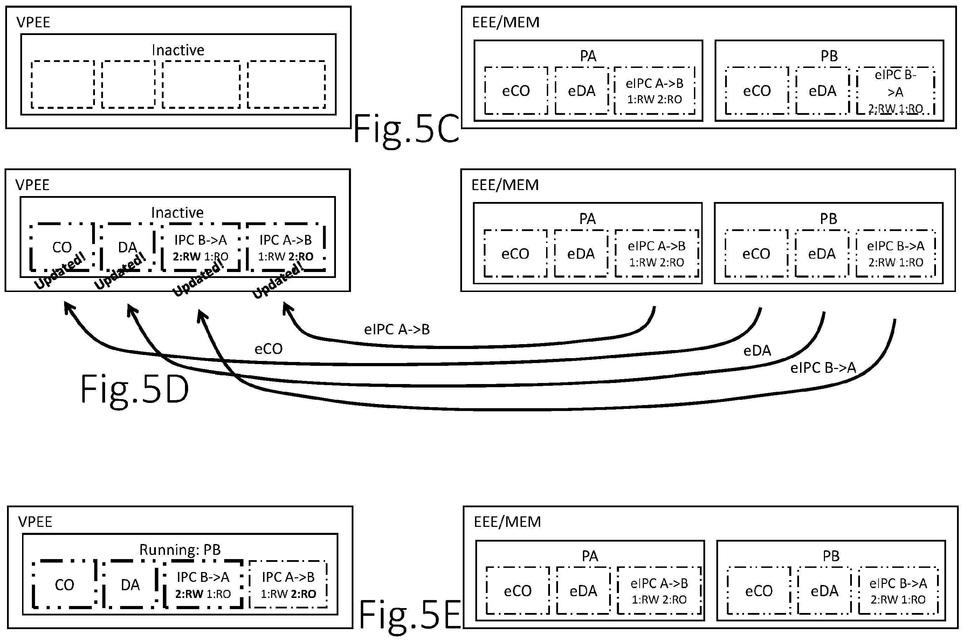

Figure 5C shows schematically the situation while switching occurs. No more process are performed on the VPEE side which is inactive. Data eDA and encrypted IPC elPC A->B are updated with newly downloaded eDA and elPC A->B.

Then, as shown on figure 5D, the second process PB is scheduled. This consists in loading the code eCO and data eDA as stored encrypted for the process PB as well as the two encrypted elPC A->B and elPC B->A, also previously stored encrypted, in the VPEE memory.

All these uploaded elements are then decrypted in the VPEE and loaded in the execution environment for execution.

Figure 5E shows the situation when the process PB is running.

It is noted here that the splitting of the VPP LLOS between VPEE and EEE creates overhead, mostly due to communication between these subsystems. However the invention presents very interesting properties. It enables in particular to debug any kind of VPP Application which is not possible in a VPP platform as defined in the standard. Indeed the invention can be used as a base architecture to simulate a VPP system, i.e combo simulated processes and a simulated agent. VPP system debugging is thus simplified: a VPP application may run as-is with an external agent built for debug.

It also enables to implement any VPP application while not yet having TRE able to implement this standard.

This thus enable to deploy VPP on a wider range of devices and to leverage existing TREs (smartcards, for instance) as platforms for executing VPP processes. It also simplify LLOS implementation by relaxing hardware constraints while providing a LLOS reference implementation. The invention also enables that a part of the LLOS is executed by an external agent on a separate host. With the invention, VPP Processes and Applications execution can be parallelized for performance or security by having multiple VPEE platforms interfaced with the external execution environment EEE.

The invention enables to running application, here VPP process, and kernel, the Low Level OS, on separate hosts while proposing an IPC emulation mechanism and VPEE management mechanism.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to implement a Virtual Primary Platform (VPP) using a Tamper Resistant Element (TRE) and an External Execution Environment (EEE), said Virtual Primary Platform (VPP) comprising a VPP Low Level Operating System (VPP LLOS) distributed across :
- a VPP Process Execution Environment (VPEE) in the Tamper Resistant Element (TRE),
- the External Execution Environment (EEE),
said VPP Low Level Operating System (VPP LLOS) comprising:
- VPP LLOS API stubs installed in the VPP Process Execution Environment (VPEE) and routing communications between the VPP Process Execution Environment (VPEE) and the External Execution Environment (EEE),
- an external agent (EA) installed in the External Execution Environment (EEE) and comprising processes' codes (CO) and data (DA) stored in the External Execution Environment (EEE) to be loaded for execution into the VPP Process Execution Environment (VPEE) in order, for the VPP Process Execution Environment (VPEE) to get a secure access to VPP external processes' code (CO) and data (DA), to emulate the VPP Low Level Operating System (VPP LLOS) functions and to manage processes' switches for the execution of any VPP application relying on the Virtual Primary Platform (VPP) to be executed.

2. Method to implement a Virtual Primary Platform (VPP) using a Tamper Resistant Element (TRE) and an External Execution Environment (EEE) according to claim 1, wherein the External Execution Environment (EEE) is remote.

3. Method to implement a Virtual Primary Platform (VPP) using a Tamper Resistant Element (TRE) and an External Execution Environment (EEE) according to claim 1, wherein the External Execution Environment (EEE) manages several VPP Process Execution Environments (VPEE) in parallel.

4. Method to implement a Virtual Primary Platform (VPP) using a Tamper Resistant Element (TRE) and an External Execution Environment (EEE) according to claim 1, wherein redundancies are implemented among several VPP Process Execution Environment (VPEE) managed in parallel by the External Execution Environment (EEE).

5. Method to implement a Virtual Primary Platform (VPP) using a Tamper Resistant Element (TRE) and an External Execution Environment (EEE) according to claim 1, wherein, when simulating a VPP system behavior to debug a VPP application, the VPP Process Execution Environment (VPEE) is an emulator and the external agent (EA) is constrained to accurately reproduce the VPP Low Level Operating System (VPP LLOS) behavior.

6. Method to implement a Virtual Primary Platform (VPP) using a Tamper Resistant Element (TRE) and an External Execution Environment (EEE) according to claim 1, wherein a Memory Management Unit (MMU) is used in the implementation of the VPP Process Execution Environment (VPEE).

7. Method to implement a Virtual Primary Platform (VPP) using a Tamper Resistant Element (TRE) and an External Execution Environment (EEE) according to claim 1, wherein the VPP Low Level OS (VPP LLOS) is responsible to schedule the VPP processes while triggering a context change when needed, making the VPP Process Execution Environment (VPEE) to encrypt the modified data of the previously running process and to unload it through the external agent, the VPP Low Level Operating System (VPP LLOS) making then the external agent (EA) to send to the VPP Process Execution Environment (VPEE) an encrypted code (eCO) and encrypted data (eDA) of a newly scheduled process to be run and the VPP Process Execution Environment (VPEE) to decrypt them before resuming the execution of this newly scheduled process.

8. Method to implement a Virtual Primary Platform (VPP) using a Tamper Resistant Element (TRE) and an External Execution Environment (EEE) according to claim 7, wherein context changes are performed when a new process invokes a service.

9. Method to implement a Virtual Primary Platform (VPP) using a Tamper Resistant Element (TRE) and an External Execution Environment (EEE) according to claim 7, wherein context changes are performed on a periodic basis.

10. Tamper Resistant Element (TRE) implementing a Virtual Primary Platform (VPP) in collaboration with an External Execution Environment (EEE), said Tamper Resistant Element (TRE) comprising a VPP Process Execution Environment (VPEE) wherein at least a part of a VPP Low Level Operating System (VPP LLOS) is implemented, the other part being implemented in the External Execution Environment (EEE), said Tamper Resistant Element (TRE) comprising VPP LLOS API stubs installed in the VPP Process Execution Environment (VPEE) and routing communications between the VPP Process Execution Environment (VPEE) and an external agent (EA) installed in the External Execution Environment (EEE) and comprising processes' codes (CO) and data (DA) stored in the External Execution Environment (EEE) to be loaded for execution into the VPP Process Execution Environment (VPEE) in order, for the VPP Process Execution Environment (VPEE) to get a secure access to VPP external processes' code (CO) and data (DA), to emulate VPP Low Level Operating System (VPP LLOS) functions and to manage processes' switches for the execution of any VPP application relying on the Virtual Primary Platform (VPP) to be executed.
